# EUROPÄISCHE PATENTSCHRIFT

(11) **EP 2 176 095 B1**
(45) Veröffentlichungstag und Bekanntmachung des Hinweises auf die Patenterteilung: **24.04.2013**
(21) Anmeldenummer: 09780917.2
(22) Anmeldetag: 22.07.2009
(51) Int. Cl.: B60R 21/217

(54) **AIRBAGMODUL MIT EINEM GASSACK UND EINEM AN EINEM MODULGEHÄUSE BEFESTIGBAREN ROHRGASGENERATOR**
AIRBAG MODULE COMPRISING AN AIRBAG AND A TUBULAR GAS GENERATOR THAT CAN BE FASTENED TO A MODULE HOUSING
MODULE AIRBAG COMPORTANT UN SAC GONFLABLE ET UN GÉNÉRATEUR DE GAZ DE FORME TUBULAIRE POUVANT ÊTRE FIXÉ SUR UN BOÎTIER DU MODULE

(30) Priorität: 20.08.2008 DE 102008039181
(43) Veröffentlichungstag der Anmeldung: 21.04.2010
(73) Patentinhaber: Takata AG, 63743 Aschaffenburg (DE)
(72) Erfinder: FECHNER, Tobias, 63743 Aschaffenburg (DE); MEISENZAHL, Sebastian, 63808 Haibach (DE)
(74) Vertreter: Baumgärtel, Gunnar
(86) Internationale Anmeldenummer: PCT/EP2009/059414
(87) Internationale Veröffentlichungsnummer: WO 2010/020511

(56) Entgegenhaltungen:
- EP-A- 0 782 943
- DE-A1-102005 004 286
- DE-B3- 10 320 008
- DE-U1- 29 921 416

## Beschreibung

Die Erfindung betrifft ein Airbagmodul mit einem an seinem Modulgehäuse befestigbaren Rohrgasgenerator nach dem Oberbegriff des Anspruchs 1.

Aus der DE 10 2005 004 286 A1 ist ein Airbagmodul bekannt, bei dem ein Rohrgasgenerator an einem Ende mittels einer Haltevorrichtung befestigt ist, die einen im Zwischenraum einer Diffusorgehäusewandung und einer Gasgeneratorwandung angeordneten Befestigungsring aufweist. Dieser Befestigungsring umschließt den Gasgenerator. Das dem Befestigungsring gegenüberliegende andere freie Ende des Gasgenerators ist mit Gasaustrittsöffnungen versehen und kommt in herkömmlicher Weise beim Einschieben an einem Anschlag oder der Stirnwandung des Diffusorgehäuses zur Anlage. Diese Anordnung erfordert einen längs im Modulgehäuse verlaufenden Hohlraum, der ein besonders großes und teueres Spritzwerkzeug erfordert

Der Erfindung liegt die Aufgabe zugrunde, eine Befestigungseinrichtung für einen Rohrgasgenerator zu schaffen, der Gasaustrittsöffnungen an seinem Umfang aufweist.

Erfindungsgemäß wird das gemäß den Merkmalen des Anspruchs 1 erreicht.

Bei einem Airbagmodul mit einem Gassack und mit einem an einem Modulgehäuse befestigbaren Rohrgasgenerator, der an seinem Umfang Gasaustrittsöffnungen aufweist, ist der Rohrgasgenerator erfindungsgemäß mittels zweier über den Rohrgasgenerator und über Abschnitte des Modulgehäuses bewegbarer Klemmringe am Modulgehäuse fixierbar. Weiterhin weist das Modulgehäuse in seinem Boden eine Öffnung für das Einführen des Rohrgasgenerators auf, wobei am Modulgehäuse unterhalb dieser Öffnung eine Auflage für den Rohrgasgenerator vorgesehen ist, wobei die Auflage eine geringere Länge als der Rohrgasgenerator aufweist, und wobei die Klemmringe so ausgebildet sind, dass sie nach dem Positionieren des Rohrgasgenerators einerseits mit einem verlängerten Abschnitt durch axiales Verschieben in Richtung der Mitte des Rohrgasgenerators unter die Auflage greifen und andererseits mit dem anderen verlängerten Abschnitt noch über den Boden des Modulgehäuses greifen.

Diese Anordnung ermöglicht in einfacher Weise die Befestigung eines Rohrgasgenerators, wobei diese Befestigungsart einen geringen Bauraum beansprucht. Dabei wird der Rohrgasgenerator von oben, d.h., vom Lagerraum des Gassacks aus in das Modulgehäuse eingesetzt. Ein weiterer Vorteil besteht darin, dass eine Befestigung eines Rohrgasgenerators unabhängig von seiner Länge und eine vereinfachte Herstellung möglich sind.

Die Klemmringe sind der Geometrie des Rohrgasgenerators und des Modulgehäuses angepasst und weisen in axialer Richtung voneinander getrennte und axial in die entgegengesetzte Richtung verlaufende verlängerte Abschnitte auf.

Ein mittlerer Abschnitt und der untere, der Auflage zugeordneter verlängerter Abschnitt der Klemmringe weisen zusammen eine Länge auf, die kleiner ist als der Abstand der Kanten des Bodens und der Kanten der Auflage in Richtung der Längsachse des Rohrgasgenerators.

Es ist zweckmäßig dass die Auflage und der zugeordnete verlängerte Abschnitt der Klemmringe an ihren Enden Schrägen aufweisen, so dass durch das Verschieben der Klemmringe in Richtung der Mitte des Rohrgasgenerators der Rohrgasgenerator zwischen der Auflage und dem oberen Bereich der Klemmringe klemmbar ist.

Weiterhin ist es zweckmäßig, dass der den Boden des Modulgehäuses übergreifende verlängerte Abschnitt der Klemmringe eine geringere Dicke als ein mittlerer Abschnitt der Klemmringe aufweist. Dadurch kann sich dieser Abschnitt, sofern kein Spalt zwischen dem Boden und dem verlängerten Abschnitt vorhanden ist, elastisch verformen, so dass ein problemloses Verschieben der Ringe möglich ist.

Auch der die Auflage untergreifende verlängerter Abschnitt der Klemmringe weist in einer Ausführungsform eine geringere Dicke als der mittlere Abschnitt der Klemmringe auf, um durch elastische Verformung dieses Abschnitts im Bereich der Auflage die Fixierung des Rohrgasgenerators zu ermöglichen.

Es ist vorteilhaft, dass einerseits die Klemmringe und das Modulgehäuse so ausgebildet sind, dass eine Abdichtung zwischen diesen an Kanten des Bodens erfolgt, und dass andererseits die Klemmringe und das Modulgehäuse so ausgebildet sind, dass die Abdichtung zwischen diesem und dem Rohrgasgenerator an Kanten der Auflage und an Kanten des oberen Abschnitts der Klemmringe erzielt wird.

Obwohl mittels der Klemmringe bereits eine ausreichende Fixierung des Rohrgasgenerators am Modulgehäuse ermöglicht ist, können die Klemmringe gegenüber dem Modulgehäuse zusätzlich verrastbar sein. Zu diesem Zweck können das Modulgehäuse mindestens eine Rastnase und der Klemmring mindestens einen zugeordneten verformbaren Rasthaken aufweisen. In einer speziellen Ausführungsform sind zwei Rastnasen mit zugeordneten verformbaren Rasthaken angeordnet.

Die Befestigung des Gassacks kann in unterschiedlicher Weise erfolgen. So ist es möglich, dass der Gassack den Rohrgasgenerator umschlingt und in der Klemmstellung der Klemmringe zwischen dem Rohrgasgenerator und der Auflage fixiert ist.

Weiterhin kann ein vakuumgefalteter Gassack gesondert im Modulgehäuse befestigt sein.

Die Erfindung soll in Ausführungsbeispielen anhand von Zeichnungen erläutert werden. Es zeigen:
- Fig. 1: einen Längsschnitt durch den unteren Bereich eines Modulgehäuses mit einem daran befestigten Rohrgasgenerator;
- Fig. 1a: einen Schnitt entlang der Linie A-A der Fig. 1;
- Fig. 1b: einen Schnitt entlang der Linie A-B der Fig. 1;
- Fig. 2: einen vergrößerten Ausschnitt der Fig. 1 mit der rechten Seite des Modulgehäuses und einer abgewandelten Befestigung des Rohrgasgenerators;
- Fig. 3: die Darstellung von Montageschritten;
- Fig. 4: eine perspektivische Ansicht des Modulgehäuses von unten mit daran befestigtem Rohrgasgenerator;
- Fig. 5: eine perspektivische Ansicht des Modulgehäuses von oben mit daran befestigtem Rohrgasgenerator:
- Fig. 6: einen Abschnitt des unteren Bereichs des Modulgehäuses mit einem Klemmring und einer zusätzlichen Verrastung:
- Fig. 7: die vergrößerte Darstellung des Abschnitts nach Fig. 6
- Fig. 8: die perspektivische Ansicht eines Klemmringes.

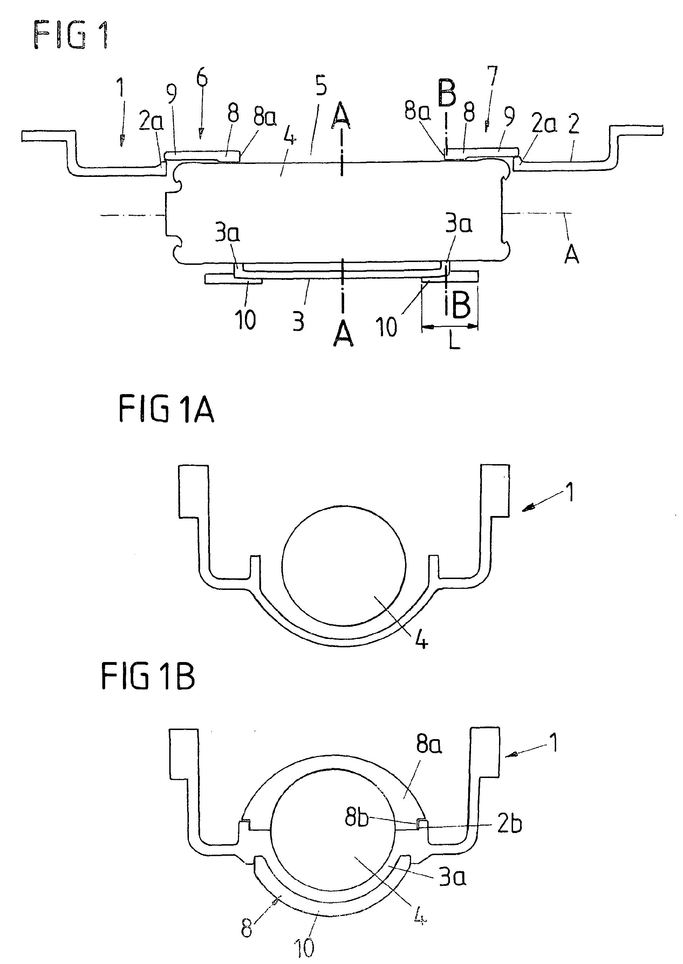

Aus dem Längsschnitt der Fig. 1 ist der untere Abschnitt eines Modulgehäuses 1 dargestellt, das einen Boden 2 und eine Auflage 3 für einen Rohrgasgenerator 4 aufweist.

Das Modulgehäuse 1 weist weiterhin Im Boden 2 eine Öffnung 5 auf, die so bemessen ist, dass der Rohrgasgenerator 4 von oben durch den Boden 2 auf die Auflage 3 gelegt werden kann. Zur Befestigung des Rohrgasgenerators 4 am Modulgehäuse 1 sind zwei Klemmringe 6, 7 vorgesehen, die innen an die Geometrie des Rohrgasgenerators 4 angepasst sind. Die Fig. 1 zeigt den Rohrgasgenerator 4 nach seiner Fixierung durch die Klemmringe 6, 7. Jeder Klemmring weist einen mittleren Abschnitt 8, einen oberen verlängerten Abschnitte 9 sowie einen unteren verlängerten Abschnitt 10 auf. Der mittlere Abschnitt 8 und der untere verlängerte Abschnitt 10 der Klemmringe 6, 7 weisen zusammen eine Länge L auf, die kleiner ist als der Abstand der Kanten 2a des Bodens 2 und der Kanten 3a der Auflage 3 in Richtung der Längsachse A des Rohrgasgenerators 4. Die verlängerten Abschnitte 9, 10 weisen eine geringere Dicke als der mittlere Abschnitt 8 auf.

Der mittlere Abschnitt 8 weist oben einen bei Montage des Klemmringes in Richtung der Mitte des Rohrgasgenerators 4 weisenden Überstand 8a auf. In diesem ist eine Ausnehmung 8b vorgesehen, in die ein Vorsprung 2b des Bodens 2 eingreift. Dadurch wird bei der Montage ein Verdrehen der Klemmringe verhindert.

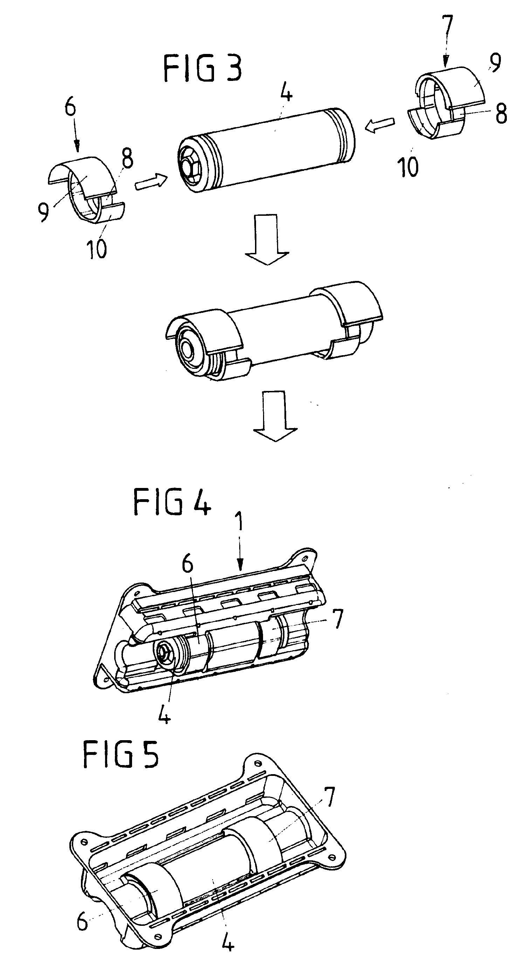

Die Montage des Rohrgasgenerators 4 erfolgt in der Weise, dass zunächst die Klemmringe 6, 7 auf den Rohrgasgenerator 4 geschoben werden, wie es in Fig. 3 dargestellt ist, wobei der mittlere Abschnitt 8 in etwa mit dem jeweiligen Ende des Rohrgasgenerators 4 abschließt. Einerseits wird dadurch und wegen der genannten Länge der Abschnitte 8, 10 ermöglicht, dass der Rohrgasgenerator 4 durch die Öffnung 5 in das Modulgehäuse bis zur Auflage 3 eingeführt werden kann und andererseits wird wegen des oberen verlängerten Abschnitts 9 ein Übergriff der Klemmringe 6, 7 über den Boden 2 erreicht. Anschließend werden die Klemmringe 6, 7 in Richtung der Mitte des Rohrgasgenerators 4 verschoben, so dass die verlängerten Abschnitte 10 unter die Auflage 3 greifen. Dabei werden die Abschnitte 10 elastisch verformt und der Rohrgasgenerator geklemmt. Da die Abschnitte 9 weiterhin den Boden 2 des Modulgehäuses 1 übergreifen, wird eine Abdichtung zwischen den Kanten 2a und den verlängerten Abschnitten 9 erzielt. Die Auflage 3 ist an ihren Enden so ausgebildet, dass in Klemmstellung der Klemmringe 6, 7 eine Dichtwirkung zwischen dem Rohrgasgenerator 4 und der Auflage 3 und insbesondere deren Kanten 3a erzielt wird, und dass die Klemmringe 6, 7 Abdichtflächen gegen den oberen Abschnitt des Rohrgasgenerators 4 aufweisen. Die Dichtflächen sind in bekannter Weise ausgebildet, wobei die Dichtflächen zwischen den Kanten 2a und den verlängerten Abschnitten 9 auch so ausgebildet sein können, dass zwischen beiden noch ein geringer Spalt vorhanden ist.

Die Befestigung des Gassacks kann unterschiedlich erfolgen. So kann der nicht dargestellte Gassack den Rohrgasgenerator 4 umschlingen, so dass er in der Klemmstellung der Klemmringe 6, 7 zwischen dem Rohrgasgenerator 4 und der Auflage 3 fixiert ist. Ein ebenfalls nicht dargestellter vakuumgefalteter Gassack kann in bekannter Weise gesondert im Modulgehäuse 1 befestigt sein.

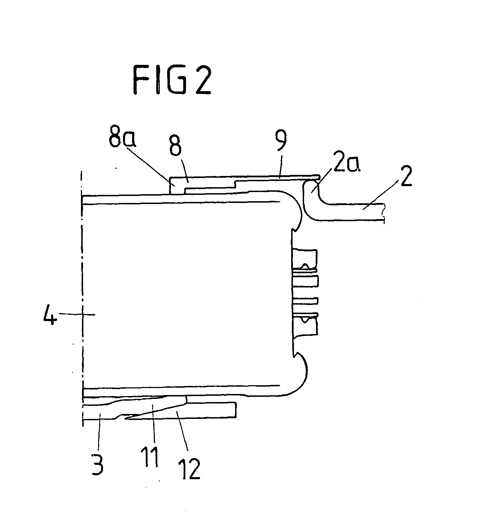

Bei der Anordnung der Fig. 2 ist eine gegenüber der Fig. 1 veränderte Befestigung dargestellt. Die Auflage weist hier Enden 11 auf, die sich außen verjüngen und im Schnitt deshalb keilförmig verlaufen. In der Fig. 2 ist ein Ende 11 im Schnitt dargestellt. Die Klemmringe 6, 7 sind an Enden 12, die der Auflage zugewandt sind, innen ebenfalls verjüngt, so dass sie im Schnitt gesehen deshalb ebenfalls keilförmig verlaufen. In der Fig. 2 ist ein Ende 12 im Schnitt dargestellt. Bei dieser Ausführungsform werden die Klemmringe 6, 7 beim Verschieben zur Mitte des Rohrgasgenerators 4 wegen des keilförmigen Verlaufs der Enden 11, 12 etwas abgesenkt, wodurch der Rohrgasgenerator 4 gegen die Auflage 3 gedrückt und somit verklemmt wird.

Die Figuren 4 und 5 zeigen den Rohrgasgenerator 4 nach seiner Befestigung im Modulgehäuse 1.

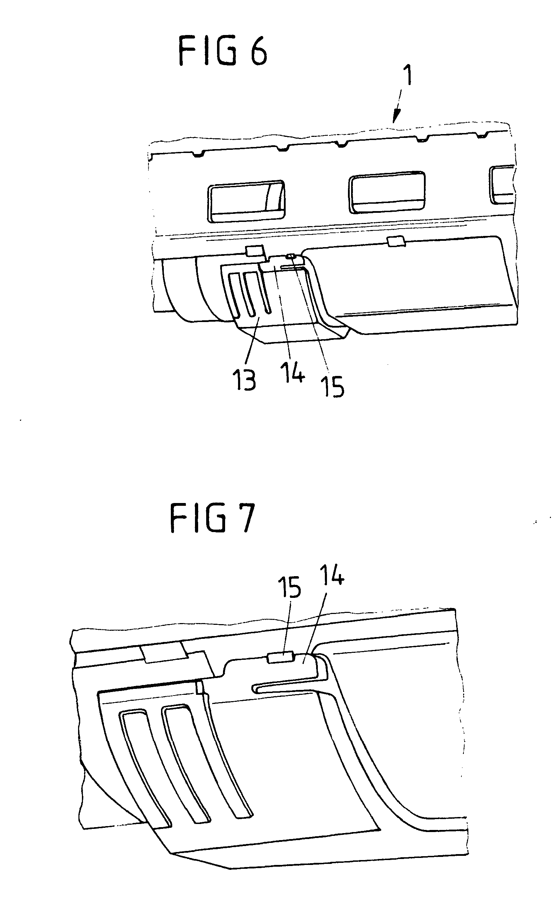

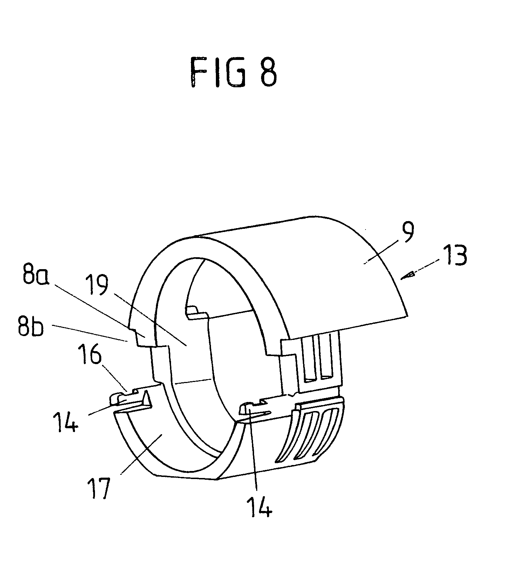

Die Figuren 6 und 7 zeigen einen Abschnitt des Modulgehäuses mit einer weiteren Ausführungsform eines Klemmringes. Der hier dargestellte Klemmring 13 weist zusätzlich einen elastisch verformbaren Rasthaken 14 auf, dem eine Nase 15 am Modulgehäuse 1 zugeordnet ist. Der übrige Aufbau des Klemmringes 13 entspricht dem der vorhergehenden Ausführungsformen. Beim Verschieben des Klemmringes 13 in Richtung der Mitte des hier verdeckten Rohrgasgenerators wird der Rasthaken 14 nach unten gedrückt, bis die Nase 15 in einen Ausschnitt 16 (Fig. 8) des Rasthakens 14 eingreift, In dieser Stellung federt der Rasthaken 14 zurück und der Klemmring 13 ist verrastet. In den Figuren 6 und 7 ist nur ein Klemmring dargestellt. Am anderen Ende des Gasgenerators, der in dieser Figur nicht dargestellt ist, ist ein entsprechender Klemmring vorgesehen.

In der Fig. 8 ist ein einzelner Klemmring 13 mit Rashaken 14 dargestellt. Es ist erkennbar, dass zwei Rasthaken 14 an einem unteren verlängerten Abschnitt 17 vorgesehen sind. Wie bei den vorhergehenden Ausführungsformen weist der Klemmring 13 einen durchgehenden mittleren Abschnitt 19 auf.

## Patentansprüche

1. Airbagmodul mit einem Gassack und mit einem an einem Modulgehäuse befestigbaren Rohrgasgenerator, der an seinem Umfang Gasaustrittsöffnungen aufweist,
**dadurch gekennzeichnet,**
**dass** der Rohrgasgenerator (4) mittels zweier über den Rohrgasgenerator (4) und über Abschnitte (2, 3) des Modulgehäuses bewegbarer Klemmringe (6, 7, 13) am Modulgehäuse (1) fixierbar ist, dass das Modulgehäuse (1) in seinem Boden (2) eine Öffnung (5) für das Einführen des Rohrgasgenerators (4) aufweist, dass am Modulgehäuse (1) unterhalb dieser Öffnung (5) eine Auflage (3) für den Rohrgasgenerator (4) vorgesehen ist, wobei die Auflage (3) eine geringere Länge als der Rohrgasgenerator (4) aufweist, und wobei die Klemmringe (6, 7, 13) so ausgebildet sind, dass sie nach dem Positionieren des Rohrgasgenerators (4) einerseits mit einem verlängerten Abschnitt (10, 12, 17) durch axiales Verschieben in Richtung der Mitte des Rohrgasgenerators (4) unter die Auflage (3) greifen und andererseits mit dem anderen verlängerten Abschnitt (9) über den Boden (2) des Modulgehäuses (1) greifen.

2. Airbagmodul nach Anspruch 1, **dadurch gekennzeichnet, dass** die Klemmringe (6, 7, 13) der Geometrie des Rohrgasgenerators (4) und des Modulgehäuses (1) angepasst sind und in axialer Richtung voneinander getrennte und axial in die entgegengesetzte Richtung verlaufende verlängerte Abschnitte (9, 10, 12, 17) aufweisen.

3. Airbagmodul nach mindestens einem der vorhergehenden Ansprüche, **dadurch gekennzeichnet, dass** ein mittlerer Abschnitt (8) und der untere, der Auflage (3) zugeordneter, verlängerter Abschnitt (10, 12, 17) der Klemmringe (6, 7) zusammen eine Länge (L) aufweisen, die kleiner ist als der Abstand der Kanten (2a) des Bodens (2) und der Kanten (3a) der Auflage (3) in Richtung der Längsachse (A) des Rohrgasgenerators (4).

4. Airbagmodul nach mindestens einem der vorhergehenden Ansprüche, **dadurch gekennzeichnet, dass** die Auflage (3) an ihren Enden (11) und der zugeordnete verlängerte Abschnitt (12) der Klemmringe (6, 7) Schrägen aufweisen, so dass durch das Verschieben der Klemmringe (6, 7) in Richtung der Mitte des Rohrgasgenerators (4) der Rohrgasgenerator (4) zwischen der Auflage (3) und dem oberen Bereich der Klemmringe (6, 7) klemmbar ist.

5. Airbagmodul nach mindestens einem der vorhergehenden Ansprüche, **dadurch gekennzeichnet, dass** der den Boden des Modulgehäuses übergreifende verlängerte Abschnitt (9) der Klemmringe (6, 7) eine geringere Dicke als ein mittlerer Abschnitt (8) der Klemmringe (6, 7) aufweist.

6. Airbagmodul nach mindestens einem der vorhergehenden Ansprüche, **dadurch gekennzeichnet, dass** der die Auflage (3) untergreifende verlängerte Abschnitt (10, 17) der Klemmringe (6, 7, 13)) eine geringere Dicke als der mittlere Abschnitt (8, 19) der Klemmringe (6, 7, 13) aufweist.

7. Airbagmodul nach mindestens einem der vorhergehenden Ansprüche, **dadurch gekennzeichnet, dass** einerseits die Klemmringe (6, 7, 13) und das Modulgehäuse (1) so ausgebildet sind, dass eine Abdichtung zwischen diesen an Kanten (2a) des Bodens (2) erfolgt, und dass andererseits die Klemmringe (6, 7, 13) und das Modulgehäuse (1) so ausgebildet sind, dass die Abdichtung zwischen diesem und dem Rohrgasgenerator (4) an Kanten (3a) der Auflage (3) und an Kanten eines Überstands (8a) der Klemmringe (6, 7, 13) erzielt wird.

8. Airbagmodul nach mindestens einem der vorhergehenden Ansprüche, **dadurch gekennzeichnet, dass** die Klemmringe (13) gegenüber dem Modulgehäuse (1) verrastbar sind.

9. Airbagmodul nach Anspruch 8, **dadurch gekennzeichnet, dass** das Modulgehäuse (1) mindestens eine Rastnase (15) und der Klemmring (13) mindestens einen zugeordneten verformbaren Rasthaken (14) aufweist.

10. Airbagmodul nach Anspruch 8, **dadurch gekennzeichnet, dass** zwei Rastnasen (15) mit zugeordneten verformbaren Rasthaken (14)angeordnet sind.

11. Airbagmodul nach mindestens einem der vorhergehenden Ansprüche, **dadurch gekennzeichnet, dass** der Gassack den Rohrgasgenerator (4) umschlingt und in der Klemmstellung der Klemmringe (6, 7, 13) zwischen dem Rohrgasgenerator (4) und der Auflage (3) fixiert ist.

12. Airbagmodul nach mindestens einem der Ansprüche 1 bis 11, **dadurch gekennzeichnet, dass** ein vakuumgefalteter Gassack gesondert im Modulgehäuse (1) befestigt ist.

## Claims

1. Airbag module with an airbag and a tubular gas generator that can be fastened to a module housing, said gas generator having gas outlet openings along the periphery thereof,
**characterized in that**
the tubular gas generator (4) can be fastened to the module housing (1) using two clamp rings (6, 7, 13) which can move along the tubular gas generator (4) and along sections (2, 3) of the module housing, the module housing (1) has an opening (5) at the base (2) thereof for introducing the tubular gas generator (4), a support (3) for the tubular gas generator (4) is provided at the module housing (1) below said opening (5), wherein the support (3) has a smaller length than the tubular gas generator (4), and wherein the clamp rings (6, 7, 13) are designed such that upon moving the rings axially towards the centre of the tubular gas generator (4), an extended section (10, 12, 17) of the clamp rings grasps underneath the support (3) on the one hand and the other extended section (9) grasps above the base (2) of the module housing (1) on the other hand after the tubular gas generator (4) is positioned.

2. Airbag module according to claim 1, **characterized in that** the clamp rings (6, 7, 13) are adapted to the geometry of the tubular gas generator (4) and the module housing (1) and have extended sections (9, 10, 12, 17) separated from each other in axial direction and continuing axially into the opposite direction.

3. Airbag module according to at least one of the preceding claims, **characterized in that** a middle section (8) and the lower extended section (10, 12, 17) of the clamp rings (6, 7) assigned to the support (3) have together a length (L) which is smaller than the distance of the edges (2a) of the base (2) and the edges (3a) of the support (3) in direction of the longitudinal axis (A) of the tubular gas generator (4).

4. Airbag module according to at least one of the preceding claims, **characterized in that** the support (3) has slants on its ends (11) and the assigned extended section (12) of the clamp rings (6, 7) has slants so that by moving of the clamp rings (6, 7) in direction of the centre of the tubular gas generator (4) the tubular gas generator (4) can be clamped between the support (3) and the upper area of the clamp rings (6, 7).

5. Airbag module according to at least one of the preceding claims, **characterized in that** the extended section (9) of the clamp rings (6, 7) grasping above the base of the module housing has a smaller thickness than a middle section (8) of the clamp rings (6, 7).

6. Airbag module according to at least one of the preceding claims, **characterized in that** the extended section (10, 17) of the clamp rings (6, 7, 13) grasping underneath the support (3) has a smaller thickness than the middle section (8, 19) of the clamp rings (6, 7, 13).

7. Airbag module according to at least one of the preceding claims, **characterized in that** on the one hand the clamp rings (6, 7, 13) and the module housing (1) are designed such that a sealing occurs between these on edges (2a) of the base (2), and that on the other hand the clamp rings (6, 7, 13) and the module housing (1) are designed such that the sealing between these and the tubular gas generator (4) is obtained on edges (3a) of the support (3) and on edges of an overhang (8a) of the clamp rings (6, 7, 13).

8. Airbag module according to at least one of the proceeding claims, **characterized in that** the clamp rings (13) can be interlocked compared to the module housing (1).

9. Airbag module according to claim 8, **characterized in that,** the module housing (1) has at least one latch nose (15) and the clamp ring (13) has at least one assigned deformable latch hook (14).

10. Airbag module according to claim 8 **characterized in that** two latch noses (15) are arranged with assigned deformable latch hooks (14).

11. Airbag module according to at least one of the preceding claims **characterized in that** the airbag entangles the tubular gas generator (4) and is fastened between the tubular gas generator (4) and the support (3) in the clamping position of the clamp rings (6, 7, 13).

12. Airbag module according to at least one of the claims 1 to 11, **characterized in that a** vacuum-folded airbag is separately fastened in the module housing (1).

## Revendications

1. Module de coussin de sécurité comprenant un coussin à gaz et un générateur tubulaire de gaz qui peut être fixé à un boîtier de module, et présente des orifices de sortie de gaz sur son pourtour,
**caractérisé par le fait**
**que** le générateur tubulaire de gaz (4) peut être bloqué à demeure, sur le boîtier de module (1), au moyen de deux bagues de coincement (6, 7, 13) mobiles au-dessus du générateur tubulaire de gaz (4) et au-dessus de tronçons (2, 3) du boîtier de module, que le boîtier de module (1) comporte, dans son fond (2), un orifice (5) dévolu à l'introduction du générateur tubulaire de gaz (4), qu'une pièce d'appui (3) pour le générateur tubulaire de gaz (4) est prévue sur le boîtier de module (1) au-dessous de cet orifice (5), la pièce d'appui (3) présentant une longueur inférieure à celle du générateur tubulaire de gaz (4), et les bagues de coincement (6, 7, 13) étant réalisées de façon telle qu'à l'issue du positionnement du générateur tubulaire de gaz (4), elles s'engagent d'une part au-dessous de la pièce d'appui (3) au moyen d'un segment prolongé (10, 12, 17), par coulissement axial en direction du centre du générateur tubulaire de gaz (4), et s'engagent d'autre part au-dessus du fond (2) du boîtier de module (1), au moyen de l'autre segment prolongé (9).

2. Module de coussin de sécurité selon la revendication 1, **caractérisé par le fait que** les bagues de coincement (6, 7, 13) sont adaptées à la géométrie du générateur tubulaire de gaz (4) et du boîtier de module (1), et comportent des segments prolongés (9, 10, 12, 17) qui sont séparés les uns des autres dans la direction axiale et s'étendent axialement dans la direction opposée.

3. Module de coussin de sécurité selon au moins l'une des revendications précédentes, **caractérisé par le fait qu'**un segment médian (8) et le segment inférieur prolongé (10, 12, 17) des bagues de coincement (6, 7) qui est associé à la pièce d'appui (3), présentent conjointement une longueur (L) inférieure à l'espacement des bords (2a) du fond (2) et des bords (3a) de la pièce d'appui (3) dans la direction de l'axe longitudinal (A) du générateur tubulaire de gaz (4).

4. Module de coussin de sécurité selon au moins l'une des revendications précédentes, **caractérisé par le fait que** des biseaux sont ménagés aux extrémités (11) de la pièce d'appui (3) et sur le segment prolongé associé (12) des bagues de coincement (6, 7), de telle sorte que le générateur tubulaire de gaz (4) puisse être enserré entre la pièce d'appui (3) et la région supérieure des bagues de coincement (6, 7), par le coulissement des bagues de coincement (6, 7) en direction du centre du générateur tubulaire de gaz (4).

5. Module de coussin de sécurité selon au moins l'une des revendications précédentes, **caractérisé par le fait que** le segment prolongé (9) des bagues de coincement (6, 7), venant coiffer le fond du boîtier de module présente une épaisseur inférieure à celle d'un segment médian (8) des bagues de coincement (6, 7).

6. Module de coussin de sécurité selon au moins l'une des revendications précédentes, **caractérisé par le fait que** le segment prolongé (10, 17) des bagues de coincement (6, 7, 13) engageant la pièce d'appui (3) par-dessous présente une épaisseur inférieure à celle du segment médian (8, 19) des bagues de coincement (6, 7, 13).

7. Module de coussin de sécurité selon au moins l'une des revendications précédentes, **caractérisé par le fait que**, d'une part, les bagues de coincement (6, 7, 13) et le boîtier de module (1) sont réalisés de façon telle qu'une étanchéité soit instaurée entre ces derniers sur des bords (2a) du fond (2), et que les bagues de coincement (6, 7, 13) et le boîtier de module (1) sont, d'autre part, réalisés de façon telle que l'étanchéité soit instaurée entre ce dernier et le générateur tubulaire de gaz (4), sur des bords (3a) de la pièce d'appui (3) et sur des bords d'une zone saillante (8a) des bagues de coincement (6, 7, 13).

8. Module de coussin de sécurité selon au moins l'une des revendications précédentes, **caractérisé par le fait que** les bagues de coincement (13) peuvent être encliquetées par rapport au boîtier de module (1).

9. Module de coussin de sécurité selon la revendication 8, **caractérisé par le fait que** le boîtier de module (1) présente d'au moins un mentonnet d'encliquetage (15) et la bague de coincement (13) présente d'au moins un crochet d'encliquetage (14) déformable associé.

10. Module de coussin de sécurité selon la revendication 8, **caractérisé par le fait que** deux mentonnets d'encliquetage (15) sont agencés avec des crochets d'encliquetage (14) déformables associés.

11. Module de coussin de sécurité selon au moins l'une des revendications précédentes, **caractérisé par le fait que** le coussin à gaz ceinture le générateur tubulaire de gaz (4) et est fixé dans la position de coincement des bagues de coincement (6, 7, 13), entre le générateur tubulaire de gaz (4) et la pièce d'appui (3).

12. Module de coussin de sécurité selon au moins l'une des revendications 1 à 11, **caractérisé par le fait qu'**un coussin à gaz plié sous vide est fixé distinctement dans le boîtier de module (1).
